## Europäisches Patentamt

## European Patent Office

## Office européen des brevets

(11) Veröffentlichungsnummer: **0 146 694**
**B1**

(12) **EUROPÄISCHE PATENTSCHRIFT**

(45) Veröffentlichungstag der Patentschrift:
30.03.88

(21) Anmeldenummer: **84110846.7**

(22) Anmeldetag: **12.09.84**

(51) Int. Cl.⁴: **H 04 N 11/00, H 04 N 5/21**

(54) Verfahren zur kompatiblen Auflösungserhöhung für Farbfernsehübertragungssysteme.

(30) Priorität: **09.12.83 DE 3344524**

(43) Veröffentlichungstag der Anmeldung:
**03.07.85 Patentblatt 85/27**

(45) Bekanntmachung des Hinweises auf die Patenterteilung:
**30.03.88 Patentblatt 88/13**

(84) Benannte Vertragsstaaten:
**AT BE CH DE FR GB IT LI NL SE**

(56) Entgegenhaltungen:
**NTG-FACHBERICHTE, Band 74, September 1980, Seiten 407-416, Berlin, DE; B. WENDLAND: "Konzepte für ein kompatibles Hifi-Fernsehsystem"**
**NEUES AUS DER TECHNIK, Nr. 4, 16. August 1982, Seite 4, Würzburg, DE; "Kompatibles Fernsehübertragungsverfahren mit erhöhter Auflösung"**
**SMPTE JOURNAL, Juli 1983, Seiten 719-723, Scarsdale, US; R.N. JACKSON u.a.: "Compatible systems for high-quality television"**

(73) Patentinhaber: **ANT Nachrichtentechnik GmbH, Gerberstrasse 33, D-7150 Backnang (DE)**

(72) Erfinder: **Wendland, Broder, Prof. Dr. Ing., Am Stadtgarten 58, D-4355 Waltrop (DE)**
Erfinder: **Eiberger, Berthold, Dr.-Ing., Im Tiefen See 34, D-6100 Darmstadt (DE)**

(74) Vertreter: **Wiechmann, Manfred, Dipl.-Ing., ANT Nachrichtentechnik GmbH Gerberstrasse 33 Postfach 11 20, D-7150 Backnang (DE)**

## Beschreibung

Die Erfindung betrifft ein Verfahren gemäss dem Oberbegriff des Patentanspruchs 1. Ein solches Verfahren liegt einem System zur Auflösungserhöhung zugrunde, wie es aus der Veröffentlichung NTG Fachberichte, Band 74, September 1980, Seite 407 bis 416, bekannt ist.

Die derzeitigen Farbfernsehsysteme haben hinsichtlich ihrer Bildwiedergabequalität Mängel. Durch die einkanalige Übertragung des Leuchtdichtesignals und der geträgerten Farbinformation ist neben dem Gewinn der Farbdarstellung gegenüber den alten Schwarz-Weiss-Übertragungssystemen eine Qualitätsminderung entstanden. Die effektive Auflösung beträgt im Luminanzkanal der Systeme (bezogen auf 625 Zeilennorm) etwa 4 MHz.

Im Hinblick auf zukünftige Farbfernsehsysteme erscheint es sinnvoll, die Bildqualität über den heutigen Stand hinaus zu verbessern bei gleichzeitiger Kompatibilität zu den bereits bestehenden Systemen.

Zur kompatiblen Verbesserung der Detailauflösung wurde in Fernseh- und Kino-Technik, 34. Jahrgang, Nr. 2/1980, Seiten 41 bis 48, das Verfahren der Offsetabtastung unter Zuhilfenahme der planaren Vor- und Nachfilterung und Vollbildwiedergabe angegeben. Die Auflösung kann dabei in horizontaler Richtung erheblich gesteigert werden. Eine Qualitätsverbesserung in vertikaler Richtung erfolgt durch Vollbilddarstellung. Gegenüber älteren Arbeiten zur Offsetabtastung («Investigation into Redundancy and possible Bandwidth Compression in Television Transmission», Philips Research Reports 15, 1960, Seiten 30 bis 96) wird durch Verwendung planarer Vor- und Nachfilter und der Vollbilddarstellung eine fehlerfreie Auflösungserhöhung bei den entsprechend verbesserten Empfängern erzielt. Bei der Wahl des Abtastverfahrens als Pulsamplitudenmodulation zur Signalübertragung bleibt eine gewisse Beeinträchtigung der Qualität am kompatiblen Empfänger: die nun im Signal vorhandene Zusatzinformation zur Erhöhung der Detailauflösung führt in den bestehenden Systemen zu zusätzlichen 25 Hz Flackerstörungen (in 60 Hz-Zeilensprungsystemen zu 30 Hz-Flackerstörungen). Sofern die Information für Luminanz und Chrominanz nicht übersprechfrei übertragen werden, entstehen durch die Offsetabtastung weitere Übersprechprobleme.

Aus «Multiplexed Analogue Components – A New Video Coding System for Satellite Broadcasting»; Rawlings, R.; Morcom, R.; Electron. Eng. Assoc.; IEEE; Conference Brighton, England, 18.–21. Sept. 1982; IBC 82; International Broadcasting Convention; XVI + 376 P.; Seiten 158–164, ist es bekannt, räumlich-zeitliche Aliaseffekte, die durch das gefaltete hochfrequente Spektrum entstehen dadurch zu reduzieren, dass die hochfrequenten Spektralanteile vor der Faltung in ihrer Signalamplitude abgesenkt werden.

Aufgabe der Erfindung ist es, ein Verfahren gemäss dem Oberbegriff des Patentanspruchs 1 so auszubilden, dass eine Signalübertragung mit erhöhter Detailauflösung zu einem bestehenden Übertragungssystem kompatibel möglich ist, ohne dass unerwünschte Störkomponenten merklich hervortreten. Diese Aufgabe wird durch die kennzeichnenden Merkmale des Patentanspruchs 1 gelöst.

Die Unteransprüche zeigen vorteilhafte Weiterbildungen und Verbesserungen des Verfahrens auf, sowie vorteilhafte Anwendungsmöglichkeiten.

Das Verfahren nach der Erfindung hat den Vorteil, dass die zusätzlichen 25 Hz- (bzw. 30 Hz-) Flackerstörungen und die gegebenenfalls auftretenden Übersprechprobleme für den kompatiblen Empfänger verhindert werden. Durch die Verwendung des erfindungsgemässen Verfahrens werden die für bestehende Übertragungsverfahren vorgegebenen Bandbreiten nicht verändert. Damit bleibt die Qualität für den Empfänger der bestehenden Normen nach NTSC, SECAM oder PAL vollständig erhalten. Die Signalabsenkung erfolgt vorteilhafterweise im Gegensatz zum Stand der Technik (Rawlings, Morcom) nach der Faltung.

Anhand der Zeichnungen wird die Erfindung nun näher erläutert. Es zeigen:

Fig. 1 ein Blockschaltbild zur Durchführung des erfindungsgemässen Verfahrens;

Fig. 2 das senderseitig planar vorgefilterte Luminanzsignal,

Fig. 3 die örtliche Struktur der Offset-Modulationsfrequenz; Orte gleicher Phasen,

Fig. 4 das offsetmodulierte Signal am senderseitigen Ausgang,

Fig. 5 das Empfangssignal nach der Übertragung;

Fig. 6 den Frequenzgang des empfangsseitigen Tiefpasses,

Fig. 7 das empfangsseitig aufbereitete Signal vor der planaren Nachfilterung,

Fig. 8 eine Schaltungsvariante mit Hochpass/Tiefpass-Filterung,

Fig. 9 die Frequenzgänge der komplementären Hochpass/Tiefpassfilter,

Fig. 10 ein Blockschaltbild des Systems für eine Farbfernsehübertragung nach der PAL-Norm mit einkanaliger Übertragung der Leuchtdichte- und der geträgerten Farbdifferenzsignale,

Fig. 11 ein Blockschaltbild zur zeitlichen Filterung von Luminanz- und Chrominanzsignalen nach dem Konzept der Rekursivfilterung,

Fig. 12 ein Blockschaltbild zur zeitlichen Filterung von Luminanz- und Chrominanzsignalen nach dem Konzept der Transversalfilterung,

Fig. 13 ein Blockschaltbild zur bewegungsabhängigen Steuerung der Offsetmodulation mit Hilfe eines Bewegungsdetektors.

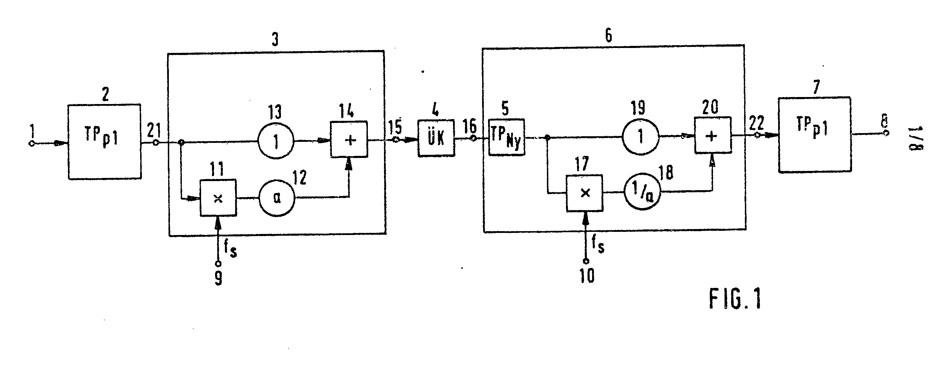

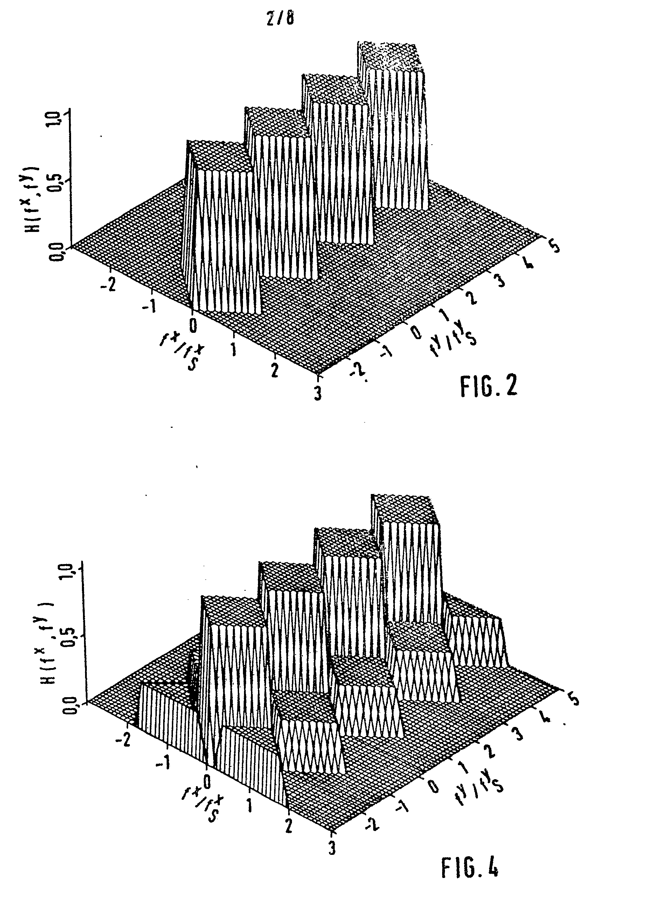

Das Blockschaltbild nach Fig.1 dient zur Erläuterung eines Systems zur Durchführung des Verfahrens nach der Erfindung für den Fall der Offsetmodulation, die sich für analoge als auch für digitale Übertragungssysteme eignet. Der Eingangsklemme 1 wird das monochrome Bildsignal zugeführt. Mittels eines planaren Filters 2 wird dieses monochrome Bildsignal planar bandbegrenzt. An der Ausgangsklemme 21 erscheint das derart bandbegrenzte Signal, vgl. Fig. 2. Andere Formen der planaren Bandbegrenzung sind ebenfalls möglich, sofern ihre Strukturen überlappungsfrei aneinanderpassen. So kann beispielsweise anstelle der in Figur 2 aufgezeigten rautenförmigen Bandbegrenzung eine sechseckförmige o.ä. Bandbegrenzung erfolgen. Der prinzipielle Aufbau planarer Filter ist beispielsweise in «B. Wendland, High Definition Television studies on compatible basis with present standards, Television technology in the 80's, Scarsdale/New York, SMPTE 1981, Seiten 124 bis 131» oder in «S. Hentschke, Auflösungsgünstige digitale Chromabfilterung zur PCM-Übertragung von Videosignalen, NTZ-Archiv, Band 5, 1983, Heft 9, Seiten 249 bis 255» angegeben.

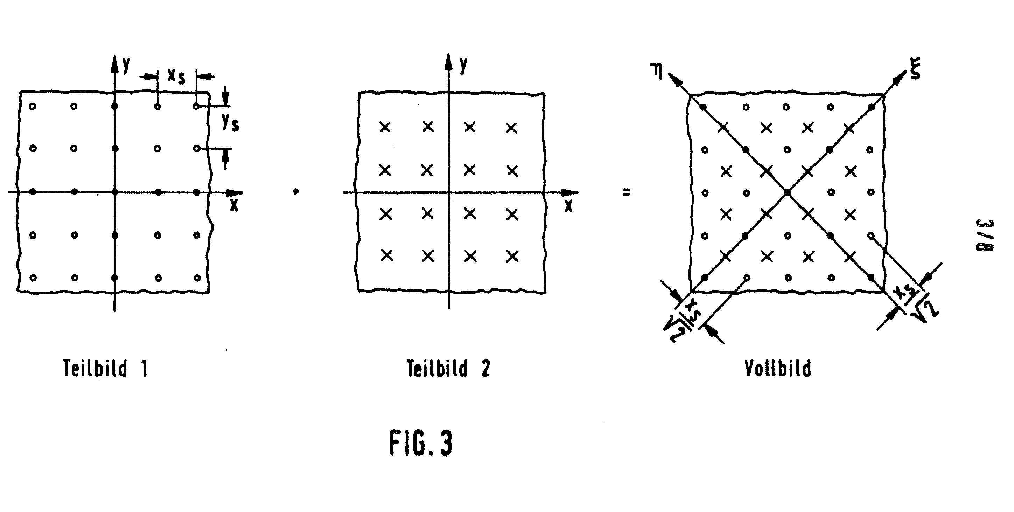

In Fig. 2 ist das bandbegrenzte Signal in einem orthogonalen Koordinatensystem im Frequenzbereich ($f^x$, $f^y$) dreidimensional dargestellt, mit einer Normierung bezogen auf $f_s^x$ und $f_s^y$. $f_s^x$ und $f_s^y$ bezeichnen Ortsfrequenzen für den nachfolgend beschriebenen Modulationsvorgang. $H(f^x, f^y)$ ist die Fouriertransformierte der Systemantwort des Filters 2 im Ortsfrequenzbereich. Das planar vorgefilterte Signal wird nun in einem senderseitigen Baustein 3 aufbereitet. Es wird über die Verstärkerstufe 13 der Addierstufe 14 zugeführt. Gleichzeitig wird es durch den Multiplizierer 11 mit der Frequenz $f_s$ von Klemme 9 aus in Offsetlage moduliert und nach einer Amplitudenwichtung mittels Einrichtung 12 um beispielsweise den Faktor a = 0,3 ebenfalls der Addierstufe 14 zugeführt. Die Darstellung der Offset-Modulationsfrequenz $f_s$ im Ortsbereich zeigt Fig. 3. Dabei sind die Orte der Sinusschwingung mit gleichen Phasen innerhalb zweier aufeinanderfolgender Teilbilder dargestellt. Die Kreise und Kreuze symbolisieren die Orte gleicher Phase. Wie Fig. 3 zeigt, sind die Orte gleicher Phase beim Teilbild 1 gegeben durch die Wertepaare ($m \cdot x_s$; $n \cdot y_s$) in der x,y-Ebene mit m = 0, 1, 2, 3, ... und n = 0, 1, 2, 3, .... Beim Teilbild 2 sind demgegenüber die Orte gleicher Phase durch die Wertepaare $(1/2+m)x_s$; $(1/2+n)y_s$ gegeben. Ein Vollbild setzt sich aus den Teilbildern 1 und 2 zusammen. (rechtes Bild). Die Offsetmodulationsfrequenz in x-Richtung wird beispielsweise zu $f_s^x$ = 6,75 MHz gewählt. Dies ist die halbe Taktfrequenz des nach CCIR vorgeschlagenen Abtasttaktes innerhalb digitaler Studios. Die Offsetmodulation gestattet es, statt des üblichen Zeilensprungverfahrens mit Hilfe der planaren Bandbegrenzung bei gleicher Informationsmenge die örtliche Auflösung in Richtung der $f^x$- und $f^y$-Achsen zu optimieren. In der Regel muss das Signalspektrum wegen der Kompatibilitätsforderung über einen Kanal mit beschränkter Bandbreite übertragen werden. Bei dem üblichen Fernsehsystem wirkt die Kanalbandbegrenzung in Richtung der x-, bzw. $f^x$-Achse. Über diesen Kanal können sehr gut die Spektren üblich orthogonal modulierter Signale übertragen werden. Wird eine Kanalbandbegrenzung mit $f^x_g \geq 1/2 f^x_s$ gewählt,

kann beispielsweise die 1. Harmonische des Spektrums eines orthogonal modulierten Zeilensprungsignals noch vollständig übertragen werden. Die Übertragung eines Signals mit einer planaren Bandbegrenzung nach Fig. 2 ist dagegen nicht ohne weiteres möglich, wenn der Kanal dabei vollständig ausgenutzt werden soll. In diesem Fall wird erfindungsgemäss die Offsetmodulation nach Fig. 3 angewendet. Für eine Kanalbandbegrenzung mit $f^x_g \geq 1/2 f^x_s$ wird die gewünschte Signalinformation vollständig übertragen, wobei ein Teil der Information nicht in der spektralen Originallage übermittelt wird. Durch eine geeignete periodische Wiederholung des Spektrums ist es jedoch möglich, auf der Empfängerseite die Originallage für alle Spektralanteile wieder zu rekonstruieren. Eine erneute Planarfilterung (empfängerseitige planare Nachfilterung) unterdrückt anschliessend die unerwünschten Spektralanteile entsprechend. Eine periodische Wiederholung des übertragenen Signalspektrums wird durch eine empfangsseitige $f_s$-synchrone Demodulation ermöglicht.

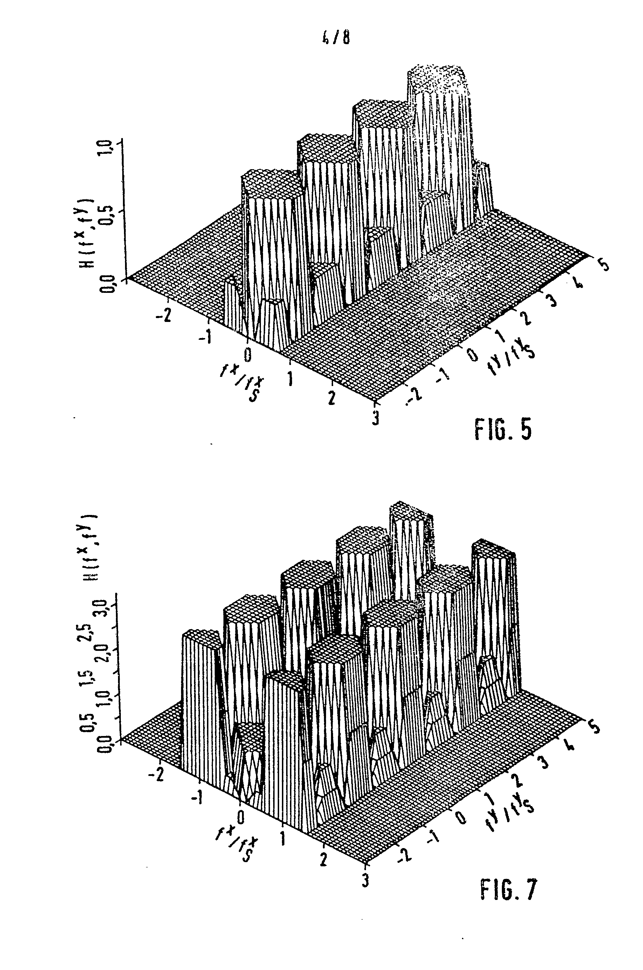

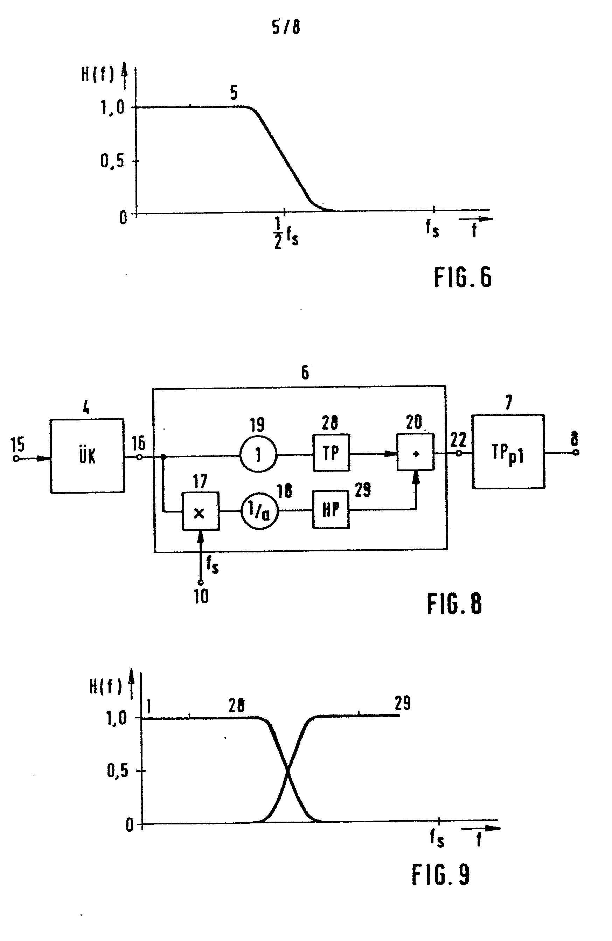

Am Ausgang der Addierstufe 14 – Klemme 15 in Fig. 1 – ergibt sich ein Signalspektrum wie es in Fig. 4 zeigt. Deutlich erkennbar sind die um den Faktor a = 0,3 abgesenkten zusätzlichen Spektralanteile. Das so aufbereitete Sendesignal wird nun über einen bandbegrenzten Übertragungskanal 4 übertragen. Nach der Übertragung steht am Eingang des Empfängers an Klemme 16 ein durch den Übertragungskanal 4 bandbegrenztes Signal gemäss Fig. 5 an. Das Empfangssignal wird mittels eines geeigneten Tiefpasses 5 geeignet bandbegrenzt. Bei dem Tiefpass 5 handelt es sich um ein Filter mit einer Nyquistflanke, schiefsymmetrisch zur halben Modulationsfrequenz $f_s$; vgl. Frequenzgang in Fig. 6. Für die zuvor gewählte Offsetmodulationsfrequenz sind dies $f^x_{Ny}$ = 3,375 MHz. Die Nyquistflanke liegt dann beispielsweise zwischen $f_D^x \approx 3$ MHz und der Sperrfrequenz mit $f_g^x \approx 3,7$ MHz. Die Bildqualität lässt sich in dieser Konfiguration auf $2 \cdot f^x_{Ny}$ = 6,75 MHz steigern, was der maximal möglichen Luminanzbandbreite des inzwischen genormten digitalen Studios entspräche. Das Ausgangssignal des Filters 5 wird über die Verstärkerstufe 19 der Addierstufe 20 zugeführt. Gleichzeitig wird das Signal durch den Multiplizierer 17 mit der Frequenz $f_s$ – dem empfangsseitigen Modul 6 an der Klemme 10 zugeführt – synchron zur Senderseite demoduliert und mit der Einrichtung 18 amplitudengewichtet. Die Synchronisierung zwischen senderseitiger Offsetmodulation und empfangsseitiger entsprechender Demodulation kann dadurch erfolgen, dass – ähnlich wie bei der Synchronisierung bei der Farbfernsehübertragung durch Aussenden eines Farbbursts und empfangsseitiger Regelung anhand dieses Farbbursts – ein zusätzliches Synchronisiersignal mitübertragen wird. Die Amplitudenwichtung – empfangsseitige Wiederanhebung – erfolgt vorzugsweise mit dem Faktor 1/a, also invers zur senderseitigen Amplitudenwichtung (-absenkung). Die Summe der beiden Signale – Klemme 22 – ist in der spektralen Darstellung gemäss Fig. 7 wiedergegeben. Der Ausgang des empfangsseitigen Moduls 6 ist mit einem Tiefpassfilter 7 zur planaren Nachfilterung auf der Empfangsseite verbunden. Am Ausgang dieses Tiefpassfilters 7 – Klemme 8 – kann ein Signal abgenommen werden, das dem Signal an der Eingangsklemme 1 entspricht.

Im zuvor beschriebenen Ausführungsbeispiel wurde eine Bandbegrenzung des Empfangssignals gemäss Fig. 6 vorgenommen. Beim Ausführungsbeispiel gemäss Fig. 8 wird auf diese Bandbegrenzung durch den Tiefpass 5 verzichtet. Anstelle des Tiefpasses 5 wird empfangsseitig zwischen dem Verstärker 19 und der Addierstufe 20 ein Tiefpass 28 und zwischen der Einrichtung 18 zur Amplitudenwiederanhebung und der Addierstufe 20 ein Hochpass 29 eingefügt. Tiefpass 28 und Hochpass 29 müssen Filter mit zueinander komplementären Filterfunktionen sein. Ihre Frequenzgänge $H(f)$ sind in Fig. 9 dargestellt. Die -6-dB-Punkte auf den Filterflanken des Tiefpasses 28 und des Hochpasses 29 müssen identisch sein und können zwischen der halben Modulationsfrequenz ($= 1/2\ f_s$) und der Bandgrenze des Übertragungskanals gewählt werden.

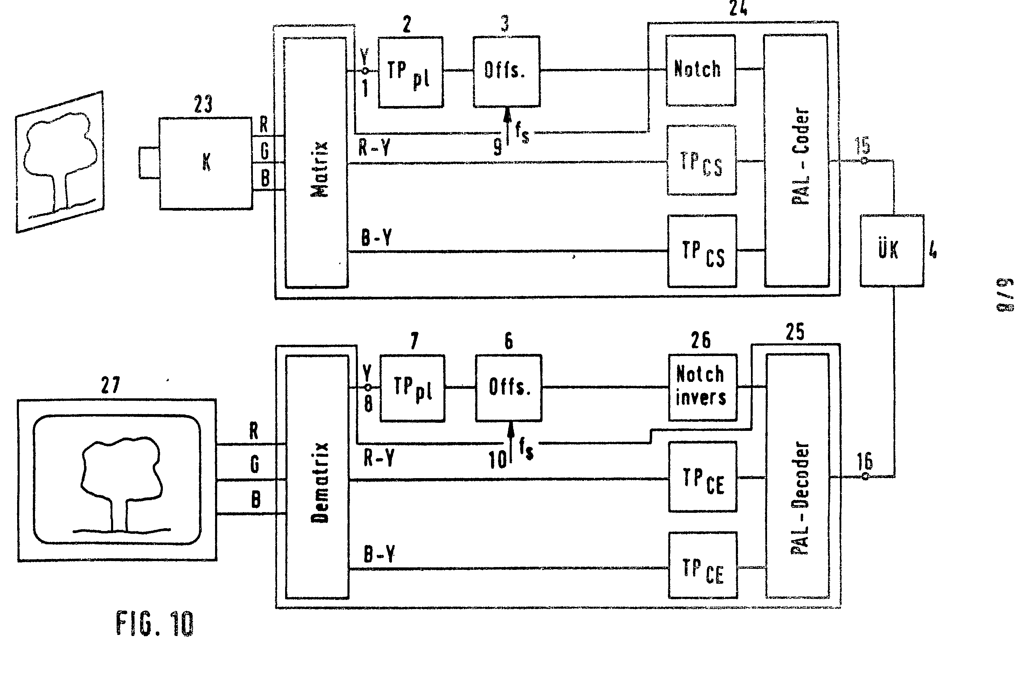

Fig. 10 zeigt im Blockschaltbild das System für eine Farbfernsehübertragung nach der PAL-Norm. Das System nach der Erfindung ist mit einfachen Modifikationen auch bei Übertragungssystemen nach der SECAM- oder NTSC-Norm anwendbar. Eine Signalquelle 23 (Fernsehkamera) liefert Farbauszüge, die im senderseitigen Codersystem 24 zu Luminanz- und Chrominanzsignalen matriziert werden. Der Luminanzauszug (Klemme 1) wird einem planaren Tiefpass 2 zugeführt und im Baustein 3 entsprechend dem Ausführungsbeispiel nach Fig. 1 verarbeitet. Der Amplitudengewichtungsfaktor a der Einrichtung 12 ist so zu wählen, dass an Klemme 15 vor dem Übertragungskanal 4 keine sichtbaren Störkomponenten auftreten. Die Filtereinrichtungen «Notch» (Farbträgerunterdrückung) sowie $TP_{CS}$ (Bandbegrenzung der Farbartspektren) sind in üblichen Codersystemen bereits vorhanden. Nach einer empfängerseitigen Dekodierung im Baustein 25 ist im Luminanzkanal gegebenenfalls eine Frequenzgangentzerrung mit einem «Notch invers»-Filter 26 vorzunehmen. Durch Einfügen der Komponenten Modul 6, planarer Tiefpassfilter 7 gemäss dem Ausführungsbeispiel nach Fig. 1, steht an der Klemme 8 ein Leuchtdichtesignal mit erhöhter Signalbandbreite zur Verfügung. Der Amplitudengewichtungsfaktor der Einrichtung 18 ist dabei invers zum Amplitudengewichtungsfaktor der Einrichtung 12 zu wählen. Die dematrizierten Signale liefern am empfangsseitigen Wiedergabemonitor 27 eine Bildqualität mit höherer Auflösung. Der Wiedergabemonitor 27 ist für eine Vollbilddarstellung geeignet.

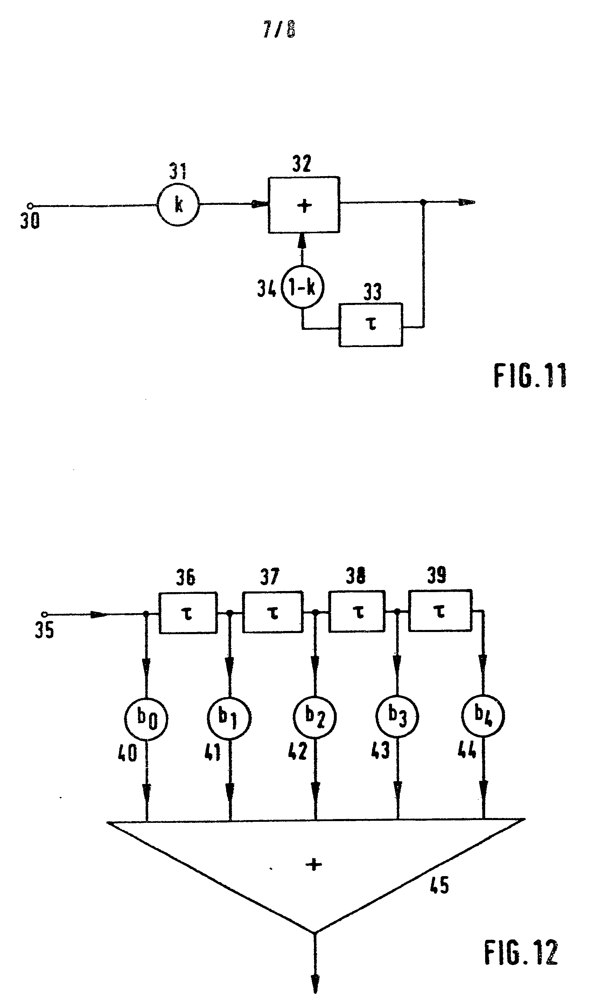

Zur Crosscolour- und Crossluminanzreduktion können zusätzliche Massnahmen angewendet werden, beispielsweise durch entsprechende zeitliche Filterung, die in unbewegten Bildteilen zulässig ist. Fig. 11 zeigt die dafür zusätzlich erforderlichen Einrichtungen unter Verwendung einer rekursiven Filterung und Fig. 12 eine Lösung mit Transversalfiltern. Die beiden Verfahren sind bekannt aus den Veröffentlichungen «Compatible Systems for High-Quality Television», SMPTE Journal Juli 1983, Seiten 719 bis 723 und «High quality decoding für PAL inputs to digital YUV studios»; BBC-Research Department 1982/12, July 1982. Die rekursive Filtereinrichtung nach Fig. 11 wird vor oder nach dem Tiefpassfilter 7 von Fig. 1 eingeschleift. Die Eingangsklemme 30 ist mit einem Dämpfungsnetzwerk 31 verbunden, dessen Dämpfungsfaktor k zwischen 0 und 1 liegt. Der Ausgang des Dämpfungsnetzwerkes 31 ist mit einem Eingang eines Addierers 32 verbunden. Der Ausgang dieses Addierers 32 ist über ein Laufzeitglied 33 für ein Vollbild und ein weiteres Dämpfungsglied 34 mit einem Dämpfungsfaktor von 1-k auf einen weiteren Eingang des Addierers 32 rückgeführt.

Bei der Realisierung nach Fig. 12 mit Transversalfilterung wird die Eingangsklemme 35 mit einem ersten Laufzeitglied 36 beschaltet, zu dem weitere Laufzeitglieder 37, 38, 39 in Kette geschaltet sind. Die Laufzeitglieder 36, 37, 38 und 39 weisen jeweils eine Verzögerung von 20 ms auf – also genau eine Halbbildverzögerung. Die Ausgänge der Laufzeitglieder 36, 37, 38 und 39, sowie der Eingang des Laufzeitgliedes 36 sind jeweils über Dämpfungsglieder 40, 41, 42, 43 und 44 mit einer Summierstufe 45 verbunden. Die Koeffizienten $b_\gamma$ ($\gamma = 0, 1, \ldots 4$) der Dämpfungsglieder 40, 41, 42, 43 und 44 sind in den Grenzen von: $-1 \leqslant b \leqslant +1$ einstellbar. Vorzugsweise werden die Koeffizienten $b_{+1}$ einstellbar. Vorzugsweise werden die Koeffizienten $b_\gamma$ symmetrisch zum mittleren Koeffizienten $b_2$ eingestellt.

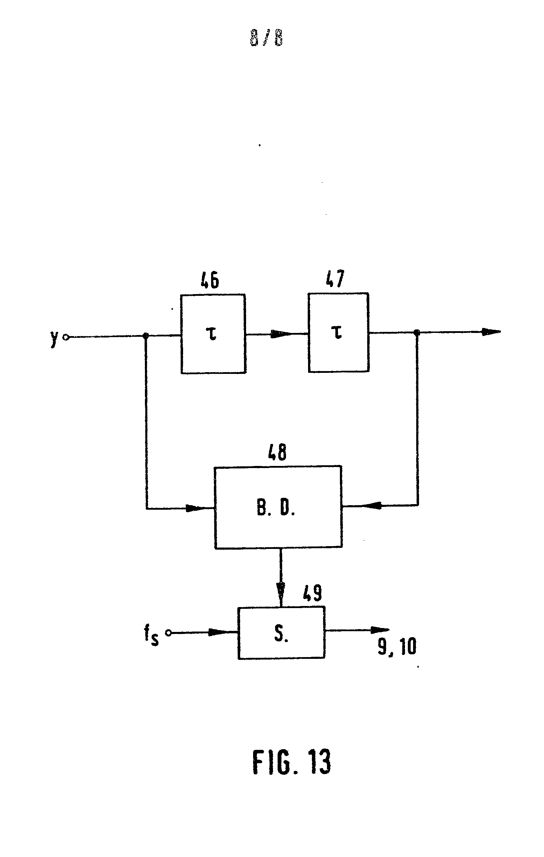

In bewegten Bildteilen kann die Offsetmodulation nicht angewendet werden. Der sender- wie der empfängerseitige Signalweg über die Bausteine 11, 12 bzw. 17, 18 muss abgeschaltet werden, und der Bildinhalt wird mit maximaler zeitlicher Auflösung bei einer entsprechend reduzierten örtlichen Auflösung dargestellt. Zur Umschaltung zwischen bewegten und unbewegten Bildteilen sind Bewegungsdetektoren und Zusatzeinrichtungen erforderlich, die – wie Fig. 13 zeigt – folgendermassen in das erfindungsgemässe System integriert werden können: In den Signalweg der Modulationsfrequenz $f_s$ (Klemmen 9, 10) von Fig. 1 wird die Einrichtung gemäss Fig. 13 eingeschleift. Das Luminanzsignal Y durchläuft zwei in Kette geschaltete Laufzeitglieder 46 und 47 für jeweils ein Halbbild ($\pi = 20$ ms). Der Eingang des Laufzeitgliedes 46 sowie der Ausgang 47 sind mit einem Bewegungsdetektor 48 verbunden, der den Betrag der Differenz zwischen verzögertem und unverzögertem Luminanzsignal bildet. Falls ein Differenzbetrag auftritt, also ein bewegter Bildteil übertragen wurde, wird die Offsetmodulation über den Schalter 49 abgeschaltet. Das Luminanzsignal wird also mit grösster zeitlicher Auflösung übertragen. Wird keine Bewegung detektiert, so arbeitet das System mit Offsetmodulation gemäss Fig. 1. Empfangsseitig sind entsprechende Einrichtungen zur Bewegungsdetektion und Abschaltung der Offsetmodulation bei Übertragung bewegter Bildteile vorgesehen. Weitere Ausführungsformen wurden bereits in der deutschen Patentanmeldung P 32 33 882 «System zur fernsehmässigen Übertragung» vorgeschlagen.

Als Multiplizierer 11 und 17 kann der integrierte Baustein TDA 1571 verwendet werden. Er wird mit einer Begrenzerstufe für die Offsetmodulationsfrequenz $f_s$, einem Filter für $f_s$ und einer Ausgangsverstärkerstufe beschaltet. Die Einrichtung 12 zur Amplitudenwichtung kann aus einem Dämpfungsglied bestehen, das aus einem Widerstandsnetzwerk ($-\pi$ oder T-Glied) besteht. Das entsprechende Netzwerk 18 auf der Empfangsseite besteht beispielsweise aus einem mit Widerständen geeignet beschalteten Operationsverstärker.

Die bisher vorgestellten Einrichtungen zur Durchführung des Verfahrens wurden für analoge Signalverarbeitung dargestellt. Es ist grundsätzlich möglich, sämtliche Einrichtungen mit digitalen Einrichtungen zu realisieren. Das Signal der Eingangsklemme 1 in Fig. 1 ist dann bereits ein Digitalsignal.

Eine geeignete Wahl des Amplitudenfaktors a in Baustein 12 sind beispielsweise die Werte a = 0,25; 0,3125 oder 0,375, da sich diese (und die inversen Faktoren in Baustein 18) in der digitalen Signaldarstellung durch Verschieben der Wertigkeit der einzelnen Bits und entsprechende Summation leicht realisieren lassen. Die Filter 2, 5, 7, 28 und 29 sind entsprechend als Digitalfilter aufgebaut. Die notwendige Digital-Analog-Wandlung hat beispielsweise an Klemme 8 am Eingang des analogen Wiedergabesystems zu erfolgen. Bei mehrfacher AD-DA-Wandlung ist auch eine gemischte Realisierung mit analogen und digitalen Komponenten möglich.

**Patentansprüche**

1. Verfahren zur kompatiblen Auflösungserhöhung für Farbfernsehübertragungssysteme mit folgenden Schritten:
— das Leuchtdichtesignal wird senderseitig planar vorgefiltert und empfangsseitig entsprechend planar nachgefiltert,
— senderseitig erfolgt eine Offsetabtastung/Offsetmodulation im Leuchtdichtekanal und empfangsseitig eine entsprechende Nachabtastung/Demodulation,
dadurch gekennzeichnet, dass alle zur Auflösungserhöhung zusätzlich zu übertragenden Signale bezüglich ihrer bei der Offsetabtastung/Offsetmodulation erzeugten nichtkompatiblen Signalanteile senderseitig nach der Offsetabtastung/Offsetmodulation in ihrer Amplitude um einen Amplitudenfaktor abgesenkt und auf der Empfangsseite mit einem dazu inversen Amplitudenfaktor wieder angehoben werden.

2. Verfahren nach Anspruch 1, dadurch gekennzeichnet, dass die zusätzlich zu übertragenden Signale mit Hilfe einer geeignet gewählten Filterfunktion senderseitig abgesenkt werden und auf der Empfangsseite mit einer komplementären Filterfunktion wieder entsprechend angehoben werden.

3. Verfahren nach Anspruch 1 oder 2, dadurch gekennzeichnet, dass ein Tiefpassfilter mit Nyquistflanke vor der empfängerseitigen Nachabtastung/Demodulation vorgesehen ist.

4. Verfahren nach einem der Ansprüche 1 bis 3 unter Verwendung der Offsetmodulation, gekennzeichnet durch eine komplementäre Hochpass-Tiefpass-Filterung nach der empfängerseitigen Demodulation.

5. Verfahren nach einem der Ansprüche 1 bis 4, dadurch gekennzeichnet, dass zur Reduktion der störenden Crossluminanz eine an sich bekannte zusätzliche zeitliche Filterung der Signalkomponenten vorgesehen ist.

6. Verfahren nach einem der Ansprüche 1 bis 4, dadurch gekennzeichnet, dass alle zur Verbesserung der Auflösung benötigten Filterfunktionen nur im verbesserten Empfänger vorgesehen sind.

**Revendications**

1. Procédé pour l'augmentation compatible de la définition pour systèmes de transmission de télévision en couleur, comprenant les opérations suivantes:
— le pré-filtrage planaire du signal de luminance côté émetteur et le post-filtrage planaire correspondant côté réception, de même que,
— l'échantillonnage/modulation à décalage, côté émetteur, dans le canal de luminance et l'échantillonnage/démodulation consécutif correspondant côté réception, caractérisé en ce que tous les signaux à transmettre en supplément, pour augmenter la définition, sont soumis, pour ce qui concerne leurs composantes de signal non compatibles produites lors de l'échantillonnage/modulation à décalage, à un abaissement de leur amplitude d'un facteur d'amplitude, côté émetteur, à la suite de l'échantillonnage/modulation à décalage, et sont relevés de nouveau côté réception, avec un facteur d'amplitude inverse par rapport au facteur mentionné en premier.

2. Procédé selon la revendication 1, caractérisé en ce que les signaux à transmettre en supplément sont abaissés, côté émetteur, à l'aide d'une fonction de filtrage convenablement choisie et sont relevés de nouveau en conséquence, côté réception, à l'aide d'une fonction de filtrage complémentaire.

3. Procédé selon la revendication 1 ou 2, caractérisé par la prévision d'un filtre passe-bas à flanc de Nyquist avant l'échantillonnage/démodulation consécutif côté récepteur.

4. Procédé selon une des revendications 1 à 3, avec utilisation de la modulation à décalage, caractérisé par un filtrage passe-haut/passe-bas complémentaire à la suite de la démodulation côté récepteur.

5. Procédé selon une des revendications 1 à 4, caractérisé en ce que, pour réduire l'interférence de luminance gênante, on prévoit en plus un filtrage temporel, des composantes de signal, filtrage qui est en lui-même connu.

6. Procédé selon une des revendications 1 à 4, caractérisé en ce que toutes les fonctions de filtrage nécessaires à l'amélioration de la définition sont prévues uniquement dans un récepteur perfectionné.

## Claims

1. Method for compatibly increasing resolution in colour television transmission systems, including the following steps:

– the luminance signal is planarly prefiltered at the transmitting end and is planarly postfiltered correspondingly at the receiving end;

– offset sampling/offset modulation takes place in the luminance channel at the transmitting end and the corresponding resampling/demodulation takes place at the receiving end;

characterised in that, at the transmitting end, all signals additionally transmitted for the purpose of increasing resolution are suitably reduced in amplitude, after the offset sampling/offset modulation, with respect to their noncompatible signal components generated by the offset sampling/ offset modulation by an amplitude factor and are raised again et the receiving end by an amplitude factor inverse thereto.

2. Method according to claim 1, characterised in that the additionally transmitted signals are reduced at the transmitting end with the aid of a suitably selected filter function and are correspondingly raised again at the receiving end with a complementary filter function.

3. Method according to claim 1 or 2, characterised in that a lowpass filter having a Nyquist slope is provided before resampling/demodulation at the receiving end.

4. Method according to one of claims 1 to 3 and employing offset modulation, characterised in that complementary highpass/lowpass filtering takes place after the demodulation at the receiving end.

5. Method according to one of claims 1 to 4, characterised in that known additional time filtering of the signal components is provided in order to reduce interfering cross-luminance.

6. Method according to one of claims 1 to 4, characterised in that all filter functions required to improve resolution are provided only in the improved receiver.

FIG. 1

1/8

FIG. 2

FIG. 4

Teilbild 1 + Teilbild 2 = Vollbild

FIG. 3

FIG. 5

FIG. 7

FIG.6

FIG.8

FIG.9

FIG. 10

**FIG.11**

**FIG.12**

19

FIG. 13